# EUROPÄISCHE PATENTANMELDUNG

(11) **EP 2 241 952 A1**
(43) Veröffentlichungstag der Anmeldung: **20.10.2010**
(21) Anmeldenummer: 09005484.2
(22) Anmeldetag: 17.04.2009
(51) Int. Cl.: G05B 23/02, G06F 1/14

(54) **Verfahren zur Überprüfung einer Datenverarbeitungseinrichtung auf die Eignung zur Durchführung fehlersicherer Automatisierungsabläufe**

(71) Anmelder: Siemens Aktiengesellschaft, 80333 München (DE)
(72) Erfinder: Schenk, Andreas, 91052 Erlangen (DE); Walter, Markus, 96050 Bamberg (DE)

(57) **Zusammenfassung**

Verfahren zur Überprüfung einer Datenverarbeitungseinrichtung auf die Eignung zur Durchführung fehlersicherer Automatisierungsabläufe

Die vorliegende Erfindung betrifft ein Verfahren zur Überprüfung einer Datenverarbeitungseinrichtung (100), insbesondere einer Automatisierungseinrichtung (100) oder eines Computers (100), auf die Eignung zur Durchführung fehlersicherer Automatisierungs-Abläufe,
wobei die Datenverarbeitungseinrichtung (100) eine erste (138) und eine zweite Zeitbasis (136) aufweist, und
wobei das Verfahren die folgenden Schritte umfasst:
- Ermittlung eines ersten Zeitwerts der ersten Zeitbasis (138) nach dem Ablauf einer Zeitspanne der Länge T,
- Ermittlung eines zweiten Zeitwerts der zweiten Zeitbasis (136) nach dem Ablauf einer Zeitspanne der Länge T,
- Bestimmung einer Abweichung zwischen dem ersten und dem zweiten Zeitwert,
- Auslösen einer Störungsmaßnahme, wenn die Abweichung einen vorgegebenen oder vorgebbaren Grenzwert unterschreitet, insbesondere unterschreitet oder erreicht.

## Beschreibung

Verfahren zur Überprüfung einer Datenverarbeitungseinrichtung auf die Eignung zur Durchführung fehlersicherer Automatisierungsabläufe

Die vorliegende Erfindung betrifft ein Verfahren zur Überprüfung einer Datenverarbeitungseinrichtung auf die Eignung zur Durchführung fehlersicherer Automatisierungsabläufe.

Derartige Verfahren sind aus dem Stand der Technik bekannt. So offenbart beispielsweise die Veröffentlichungsschrift EP 1 043 640 A2 ein Verfahren, bei welchem mittels der Überprüfung von Kennungs-Codierungen der Zentraleinheit eines Automatisierungssystems feststellbar ist, ob die Zentraleinheit zur Durchführung von fehlersicheren Anwendungen geeignet ist.

Es ist ein Nachteil des Standes der Technik, dass diese Kennungen, die üblicherweise bereits bei der Produktion eines Automatisierungssystems festgelegt werden, von Anfang an fest steht und auch nicht an spätere Weiterentwicklungen anpassbar sind. Weiterhin ist damit auch eine spätere Eignungsprüfung für sicherheitsgerichtete Anwendungen nicht möglich, wenn dies nicht bereits bei der Herstellung der Hardware vorgesehen war und überprüft wurde. Insbesondere bei der Verwendung von standardisierten Datenverarbeitungseinrichtungen, wie beispielsweise einem Personalcomputer oder einer Workstations, im Automatisierungsumfeld sind derartige Kennungen üblicherweise nicht vorgesehen.

Daher ist es eine Aufgabe der vorliegenden Erfindung, ein Verfahren zur Verfügung zu stellen, mit welchem sich eine Datenverarbeitungsvorrichtung einfacher oder flexibler auf die Möglichkeit der Durchführung fehlersicherer Automatisierungsabläufe überprüfen lässt.

Diese Aufgabe wird gelöst von einem Verfahren zur Überprüfung einer Datenverarbeitungseinrichtung, insbesondere einer Automatisierungseinrichtung, eines Computers, eines Personal-Computers oder einer Workstation, auf die Eignung zur Durchführung fehlersicherer Automatisierungs-Abläufe,
- wobei die Datenverarbeitungseinrichtung eine erste und eine zweite Zeitbasis aufweist und
- wobei das Verfahren die folgenden Schritte umfasst:
   a) Ermittlung eines ersten Zeitwerts der ersten Zeitbasis nach dem Ablauf einer Zeitspanne der Länge T,
   b) Ermittlung eines zweiten Zeitwerts der zweiten Zeitbasis nach dem Ablauf einer Zeitspanne der Länge T,
   c) Bestimmung einer Abweichung zwischen dem ersten und dem zweiten Zeitwert,
   d) Auslösen einer Störungsmaßnahme, wenn die Abweichung einen vorgegebenen oder vorgebbaren Grenzwert unterschreitet und, insbesondere unterschreitet oder erreicht.

Dabei können Datenverarbeitungseinrichtungen im Sinne der vorliegenden Beschreibung alle zur Steuerung von Automatisierungsabläufen geeignete oder eingerichtete Einrichtungen, Geräte oder Gerätekombinationen sein. Dazu gehören z.B. speziell dafür entwickelte Einrichtungen, wie z.B. sogenannte "Speicherprogrammierbare Steuerungen" (SPS) bzw. deren Komponenten oder auch andere elektronische Steuereinrichtungen oder Controller. Eine Datenverarbeitungseinrichtung kann aber beispielsweise auch ein Computer, wie beispielsweise ein Personalcomputer (PC) oder eine Workstation sein. Solche Computer können z.B. durch entsprechende Programmierung, Betriebssysteme bzw. -versionen und/oder Programmierung ebenfalles zur Durchführung von Automatisierungsabläufen eingerichtet oder ausgebildet sein.

Im Rahmen dieser Beschreibung werden unter fehlersicheren Automatisierungs-Abläufen auch sicherheitsgerichtete Automatisierungs-Abläufe verstanden, wie sie z.B. in der IEC 61508 beschrieben werden.

Unter fehlersicheren Automatisierungs-Abläufen werden im Rahmen der vorliegenden Beschreibung fehlersichere bzw. sicherheitsgerichtete Automatisierungsabläufe bezeichnet, die beispielsweise dem IEC 61508-Standard und/oder einem vergleichbaren Standard und/oder einer vergleichbaren Regelung entsprechen.

Um für die Durchführung derartiger fehlersicherer Automatisierungs-Abläufe geeignet zu sein, muss eine Datenverarbeitungsvorrichtung, je nach gewähltem Fehlersicherheits-Standard oder -Eigenschaften gewisse Voraussetzungen erfüllen. Solche Eigenschaften können z.B. das Vorliegen voneinander unabhängiger, redundanter Zeitbasen oder ähnliches sein.

Im Rahmen der vorliegenden Beschreibung wird unter der "Überprüfung der Eignung zur Durchführung fehlersicherer Automatisierungs-Abläufe" die Prüfung eines oder mehrerer Kriterien der für den gewählten Sicherheitslevel notwendigen Kriterien verstanden. Es impliziert nicht die vollständige Überprüfung aller notwendigen Kriterien.

Für eine Durchführung derartiger fehlersicherer Automatisierungsabläufe sind im Automatisierungssystem zum Beispiel zwei voneinander unabhängige Zeitbasen erforderlich. Durch einen regelmäßigen Vergleich der Zeitbasen ist das System dann in der Lage, innerhalb einer Zeitbasis auftretende Fehler oder Ausfälle zu erkennen und das gesteuerte System dann in einen sicheren Zustand zu bringen oder es darin zu halten.

Eine Zeitbasis kann dabei beispielsweise als Zähler, Takt, Uhr oder Ähnliches ausgestaltet sein und in Hardware und/oder Software realisiert sein. Unabhängig können zwei Zeitbasen beispielsweise dann sein, wenn jeder der Zeitbasen ein eigener Hardware-Taktgeber, wie beispielsweise ein Hardware-Schwingelement, zugeordnet ist.

Ein Zeitwert kann jeder auf der Taktung der jeweiligen Zeitbasis beruhender Wert sein, der ein Maß für eine abgelaufene Zeitspanne ist. Zeitwerte können z.B. im Rahmen herkömmlicher Zeiteinheiten (Stunden, Minuten, Sekunden, Millisekunden, Mikrosekunden, ...) ermittelt werden. Es können aber auch willkürliche Zeiteinheiten gewählt sein.

Solche Hardware-Schwingelemente können beispielsweise elektromechanische und/oder piezoelektrische Schwinger und/oder auch elektronische Schwinger (z.B. RC-Glieder) sein. Ein piezoelektrischer Schwinger kann beispielsweise als Schwingquarz ausgestaltet sein, wie er in heutigen elektronischen Systemen regelmäßig als Hardware-Taktquelle verwendet wird.

Verschiedene Hardware-Schwingelemente haben üblicherweise eine unterschiedliche Drift über die Zeit, beispielsweise abhängig von der Temperatur, Erwärmung, Alterung, der Luftfeuchtigkeit oder ähnlichen Umgebungsbedingungen.

Mit dem erfindungsgemäßen Verfahren ist es möglich, über den Vergleich der Zeitbasen über eine gewählte Zeitspanne festzustellen, ob in der Datenverarbeitungseinrichtung zwei derart unabhängige Zeitbasen vorgesehen sind. Ein wesentlicher Hinweis darauf ist es z.B. wenn die ermittelte Abweichung der beiden Zeitbasen nach dem Ablauf der Zeitspanne T über einem Grenzwert liegt, der beispielsweise typisch oder minimal für produktionsbedingte Driftunterschiede von entsprechend zugeordneten Hardware-Schwingelementen ist.

Dabei kann der vorgegebene oder vorgebbare Grenzwert derart gewählt sein, dass bei einem typischen oder auch minimalen Driftunterschied von im System zugrunde liegenden Hardware-Schwingelementen (wie beispielsweise Schwing-Quarzen) die Abweichung der Zeitwerte oberhalb des Grenzwerts liegt. Der Grenzwert kann beispielsweise einem maximalen Jitter (z.B. durch Takt + Leseabweichung + andere Verzögerungen) der Zeitbasen entsprechen.

Bei der Verwendung von Schwing-Quarzen kann die Differenz beispielsweise kleiner als 10⁻² oder 10⁻³ Prozent, typischerweise auch im Bereich von 10⁻⁴ Prozent der gemessenen Zeitspanne liegen bzw. einigen Vielfachen davon. Diesen genannten Grenzwerten liegt zugrunde, dass die Abweichung als Differenz des ersten und zweiten Zeitwertes berechnet wird.

Eine Abweichung kann aber auch beispielsweise als Quotient, oder auch eine Differenz oder Quotient von Quadraten der Zeitwerte oder Ähnliches berechnet werden. In diesen Fällen kann der Grenzwert dann entsprechend angepasst sein.

Die Länge T der Zeitspanne, über welche der Zeitwert einer Zeitbasis ermittelt wird, kann beispielsweise durch eine der Zeitbasen festgelegt werden. Weiterhin kann auch eine dritte Zeitbasis zur Bestimmung der Zeitspanne T herangezogen werden.

Die Ermittlung des Zeitwerts kann parallel erfolgen, so dass nach dem Ablauf der Zeitspanne der Länge T beide Zeitbasen gestoppt und der entsprechende Zeitwert ausgelesen wird. Weiterhin kann die Ermittlung der Zeitwerte auch unabhängig voneinander erfolgen und dann nachfolgend die Abweichung der Zeitwerte ermittelt werden.

Als Zeitspanne kann dabei eine Minute oder mehr, bevorzugt 5 Minuten oder mehr, weiter bevorzugt 15 Minuten oder mehr, noch weiter bevorzugt 30 Minuten oder mehr oder auch 60 Minuten oder mehr verwendet werden. Insbesondere bei der Verwendung von Schwing-Quarzen als Hardware-Schwingelement lasse sich innerhalb dieser Zeiten typische beispielsweise produktionsbedingte Driftunterschiede relativ sicher nachweisen. Dabei kann die Zeitspanne beispielsweise fest vorgegeben sein und/oder auch durch eine Anwender-Eingabe einstellbar sein.

Die Datenverarbeitungseinrichtung kann beispielsweise als Standard-Personalcomputer (PC) oder Standard-Workstation ausgebildet sein. Dies hat den Vorteil, dass derartige Standard-Komponenten, die am Markt leicht verfügbar und relativ preiswert sind, zur Steuerung von Automatisierungsabläufen einsetzbar sind. Mittels eines Verfahrens gemäß der vorliegenden Beschreibung ist es dann möglich, solche Standard-Komponenten auf die Eignung zur Durchführung fehlersichererer Automatisierungsabläufe zu überprüfen. Im positiven Fall können dann, gegebenenfalls nach weiteren Prüfungen, sogar solche Standard-Systeme für den Betrieb von fehlersicheren Automatisierungsabläufen eingesetzt werden.

Als Störungsmaßnahme, die ausgelöst wird, wenn die Abweichung einen vorgegebenen oder vorgebbaren Grenzwert unterschreitet, kann beispielsweise die Ausgabe einer Meldung vorgesehen sein, die die Unmöglichkeit der Feststellung einer Unabhängigkeit der ersten und zweiten Zeitbasis umfasst. Damit wird ein Anwender beispielsweise darauf hingewiesen, dass mittels der vorgenommenen Überprüfung eine Unabhängigkeit der ersten und zweiten Zeitbasis nicht mit genügender Sicherheit feststellbar war. Dies kann ein Anwender dann beispielsweise zum Anlass nehmen, die Hardware entsprechend zu überprüfen bzw. weitere Tests zu unternehmen.

Weiterhin kann eine Störungsmaßname auch einen automatisierten bzw. selbsttätig ablaufenden Vorgang umfassen. Ein solcher Vorgang kann beispielsweise das Verhindern oder Stoppen eines fehlersicheren Automatisierungsprogramms sein, wenn beispielsweise vor oder während dessen Ablaufs die Unabhängigkeit der Zeitbasen überprüft werden soll. Auch die Abschaltung einer Komponente bzw. eines Geräts kann eine Störungsmaßnahme bzw. Teil einer Störungsmaßnahme sein.

Eine Störungsmaßnahme gemäß der vorliegenden Beschreibung kann auch ausgelöst werden, wenn die Abweichung der Zeitwerte einen vorgegebenen oder vorgebbaren zweiten Grenzwert überschreitet. Dabei liegt der zweite Grenzwert oberhalb des Grenzwerts. Eine solche Maßnahme kann vorgesehen sein, um einen sicheren Ablauf von fehlersicheren Anwendungen zu gewährleisten. Dabei kann der zweite Grenzwert derart gewählt sein, dass bei über dem zweiten Grenzwert liegenden Abweichungen kein zuverlässiger fehlersicherer Betrieb mehr gewährleistet ist, da das System beispielsweise bei der Zeitmessung regelmäßig auf einen defekten Timer schließt (da die regelmäßige Abweichung beider Timer beispielsweise schon im Rahmen dessen liegt, was innerhalb des Systems als Fehlerfall betrachtet wird). Derartige zweite Grenzwerte können beispielsweise im Bereich von 0,01 Prozent bis 1 Prozent, unter Umständen auch bis 10 oder 50 Prozent der betrachteten Zeitspanne liegen, insbesondere im Bereich von 0,5 Prozent. Mittels dieser Ausgestaltung wird die Überprüfung einer Datenverarbeitungseinrichtung auf die Möglichkeit der Durchführung fehlersicherer Automatisierungsabläufe weiter verbessert.

Weiterhin kann vorgesehen sein, dass eine Erfolgsmaßnahme ausgelöst wird, wenn die Abweichung zwischen dem ersten und dem zweiten Zeitwert den Grenzwert überschreitet, insbesondere den Grenzwert überschreitet und den zweiten Grenzwert unterschreitet. In den genannten Fällen kann mit relativ hoher Sicherheit davon ausgegangen werden, dass die erste und die zweite Zeitbasis unabhängig voneinander sind, beispielsweise von zwei unabhängigen Hardware-Schwingelementen, wie beispielsweise Schwing-Quarzen, angetrieben bzw. getriggert werden.

Weiterhin kann in dem Fall, in welchem die Abweichung der Zeitwerte den zweiten Grenzwert unterschreitet beispielsweise auch gewährleistet sein, dass die Zeitbasen keine so großen Differenzen aufweisen, dass ein fehlersicherer Ablauf eines Automatisierungsprogramms gefährdet wäre.

Als Erfolgsmaßnahme kann beispielsweise eine Meldung über eine Feststellung der Unabhängigkeit der Zeitbasen vorgesehen sein bzw. die Erfolgsmaßnahme kann eine solche umfassen. Weiterhin kann die Erfolgsmaßnahme auch einen automatisierten Ablauf in Gang setzen oder fortsetzen bzw. eine solche Maßnahme umfassen.

In einer weiteren vorteilhaften Ausgestaltung kann die Datenverarbeitungseinrichtung als Personal-Computer oder Workstation ausgebildet sein, die eine Standard-Zeitbasis mit einem System-Quarz und eine RTC-Zeitbasis zum Betrieb einer Echtzeit-Uhr der Datenverarbeitungseinrichtung umfasst, wobei der ersten Zeitbasis der System-Quarzes zugeordnet ist und der zweite Zeitbasis der System-Quarz oder ein RTC-Quarzes zugeordnet ist. Dabei kann der RTC-Quarz standardmäßig zum Betrieb der RTC-Zeitbasis vorgesehen sein.

Die Standard-Zeitbasis kann dabei beispielsweise zur Zurverfügungstellung eines Prozessor-Taktes eingerichtet sein und beispielsweise einen "Time-Stamp-Counter", einen Local-APIC-Timer, einen PC-Timer, einen PM-Timer oder Ähnliches antreiben bzw. triggern. Die RTC-Zeitbasis kann beispielsweise zum Betrieb einer Echtzeit-Uhr vorgesehen sein, die auch bei abgeschalteter Datenverarbeitungseinrichtung weiter läuft, beispielsweise mittels Batterie-Betrieb. Die RTC-Zeitbasis bzw. der RTC-Quarz kann weiterhin auch für andere Vorgänge innerhalb der Datenverarbeitungseinrichtung vorgesehen sein. Insbesondere ist es möglich, deren Signale zum Betrieb eines zu einem Standard-Timer redundanten so genannten "F-Timers" im Rahmen eines sicherheitsgerichteten Automatisierungsprogramms zu verwenden.

Die vorstehend genannte Aufgabe wird auch gelöst von einer Datenverarbeitungseinrichtung, insbesondere einem Personal-Computer oder einer Workstation, zur Durchführung von Automatisierungsabläufen mit
- mindestens einem Prozessor,
- ein Hardware-Schwingelement zum Bereitstellen eines Taktes z.B. für den mindestens einen Prozessor,
- einer ersten Zeitbasis, die unter Verwendung des Hardware-Schwingelements betreibbar ist oder betrieben wird,
- einer zweiten Zeitbasis, die unter Verwendung eines weiteren Hardware-Schwingelements, insbesondere zum Betrieb einer Echtzeit-Uhr der Datenverarbeitungseinrichtung, oder des Hardware-Schwingelements betreibbar ist oder betrieben wird und
- einer Steuereinrichtung, die zur Durchführung eines Verfahrens gemäß der vorliegenden Beschreibung ausgebildet und eingerichtet ist.

Dabei kann das Hardware-Schwingelement beispielsweise wie in der vorliegenden Beschreibung an anderer Stelle erläutert ausgebildet sein. Es kann z.B. als System-Quarz in einem Computer ausgestaltet sein. Auch das weitere Hardware-Schwingelement kann entsprechend dem Hardware-Schwingelement ausgestaltet sein. Es kann z.B als RTC-Quarz eines Computers ausgebildet sein.

Auch mittels einer derart ausgebildeten und eingerichteten Datenverarbeitungseinrichtung lässt sich die Überprüfung der Datenverarbeitungseinrichtung auf die Eignung zur Durchführung von fehlersicheren Automatisierungsabläufen aus den vorstehend bereits genannten Gründen verbessern bzw. vereinfachen.

Die vorstehende Aufgabe wird ebenfalls gelöst von einem Programm-Element zum Überprüfen einer Datenverarbeitungseinrichtung auf die Eignung zur Durchführung fehlersicherer Automatisierungsabläufe, wobei das Programm-Element, wenn es von einem Prozessor ausgeführt wird, zum Durchführen des Verfahrens gemäß der vorliegenden Beschreibung eingerichtet ist.

Die vorstehend genannte Aufgabe wird auch gelöst von einem computerlesbaren Speichermedium, in dem ein Programm zum Überprüfen einer Datenverarbeitungseinrichtung auf die Eignung zur Durchführung fehlersicherer Automatisierungsabläufe gespeichert ist, wobei das Programm, wenn es von einem Prozessor ausgeführt wird, zum Durchführen eines Verfahrens gemäß der vorliegenden Beschreibung eingerichtet ist.

Weitere vorteilhafte Ausgestaltungen finden sich in den Unteransprüchen.

Im Folgenden wird die vorliegende Erfindung beispielhaft anhand der beiliegenden Figur näher erläutert. Es zeigt:

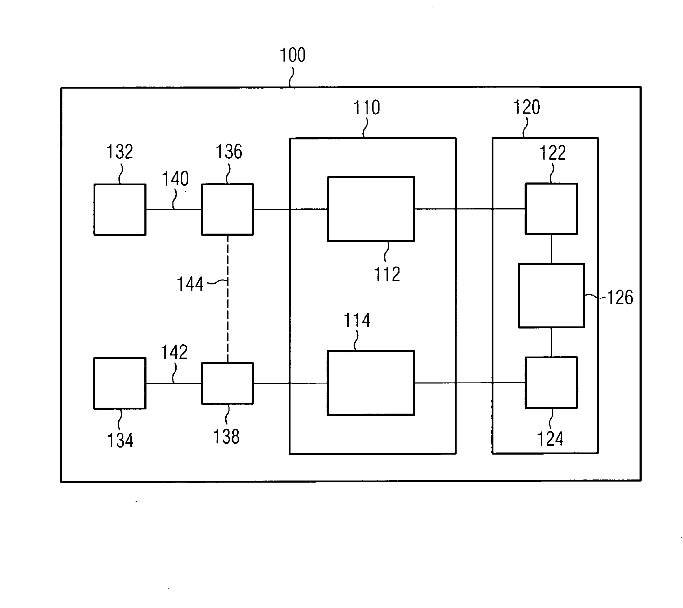

- Figur 1:: Schematische Darstellung eines Personal-Computers, der zur Durchführung einer Automatisierungsanwendung eingerichtet ist.

Figur 1 zeigt eine schematische Skizze eines Personal-Computers (PC) 100 mit einem Prozessor 110 und einer Automatisierungs-Anwendung 120. Weiterhin weist der PC 100 einen System-Quarz 134 auf, der über eine Verbindungsleitung 142 einen System-Takt-Generator 138 triggert. Weiterhin enthält der PC 100 einen RTC-Quarz 132, der über eine Verbindungsleitung 140 eine Echtzeit-Uhr 136 (Echtzeit-Uhr: Real Time Clock (RTC)) triggert. Dabei ist die Echtzeit-Uhr 136 unter anderem mit einem oder mehreren Zählern 112 im Prozessor 110 verbunden, wobei dieser Zähler 112 weiterhin als Grundlage für einen F-Timer 122 in der Automatisierungs-Anwendung dient. Der System-Takt-Generator 138 treibt beispielsweise den Takt des Prozessors sowie ebenfalls weitere Zähler 114, wobei mindestens einer davon für einen Standard-Timer 124 der Automatisierungs-Anwendung 120 verwendet wird.

Ein Steuerungsprogramm 126 der Automatisierungs-Anwendung 120 nützt dann bei allen zeitabhängigen Vorgängen sowohl die Werte des Standard-Timers 124 als auch des F-Timers 122 für eine fehlersichere Zeitbestimmung. Bei einer Abweichung beider Zeiten erkennt das System dann einen Fehler bei der Zeitmessung und schaltet das gesteuerte Automatisierungs-System in einen fehlersicheren Zustand.

Als Steuerungsprogramm 126 kann beispielsweise auch ein Programm zur Durchführung eines Verfahrens gemäß der vorliegenden Beschreibung eingesetzt sein. Dabei werden dann die Werte des F-Timers 122 bzw. des Standard-Timers 124 über den Ablauf einer vorgegebenen Zeitspanne ermittelt und verglichen. Beim Überschreiten eines ersten Grenzwertes von beispielsweise 1,361 · 10⁻⁴ Prozent der Zeitspanne gibt das Steuerungsprogramm 126 einem Anwender dann die Meldung, dass der PC 100 mit hoher Wahrscheinlichkeit unabhängige Zeitbasen aufweist und/oder zur Durchführung sicherheitsgerichteter Anwendungen geeignet ist.

Figur 1 zeigt als gestrichelte Linie 144 auch eine weitere Ausgestaltung des PC's 100. Bei dieser Ausgestaltung umfasst der PC 100 keinen RTC-Quarz 132 und es existiert keine Verbindung 140, so dass die Echtzeituhr 136 ebenfalls vom System-Takt-Generator über die Verbindung 144 betrieben wird. In diesem Fall gehen sowohl der F-Timer 122 als auch der Standard-Timer 124 der Automatisierungs-Anwendung 120 auf die gleiche Zeitbasis zurück. Dann existiert naturgemäß keine Drift gemäß der vorliegenden Beschreibung zwischen beiden Timern 122, 124 und die Abweichung der Timer 122, 124 über die gemessene Zeitspanne wird unterhalb des vorgesehenen Grenzwertes liegen. In diesem Fall gibt das Steuerungsprogramm 126 einem Anwender dann beispielsweise die Nachricht aus, dass kein Nachweis über die Durchführbarkeit eines fehlersicheren Anwenderprogramms erbracht werden konnte.

Die vorliegende Erfindung beschreibt ein Verfahren zur Überprüfung einer Datenverarbeitungseinrichtung auf zwei unabhängige Zeitbasen, wie sie beispielsweise zur Durchführung von fehlersicheren (bzw. sicherheitsgerichteten) Automatisierungs-Anwendungen gemäß dem IEC 61508 Standard erforderlich sind. Dabei wird die Tatsache ausgenützt, dass zwei unabhängige Zeitbasen typischerweise produktionsbedingt Abweichungen im Zeitablauf aufweisen, beispielsweise eine Drift, anhand derer sich die Unabhängigkeit der Zeitbasen nachweisen bzw. überprüfen lässt.

## Patentansprüche

1. Verfahren zur Überprüfung einer Datenverarbeitungseinrichtung (100), insbesondere einer Automatisierungseinrichtung (100) oder eines Computers (100), auf die Eignung zur Durchführung fehlersicherer Automatisierungs-Abläufe,
wobei die Datenverarbeitungseinrichtung (100) eine erste (138) und eine zweite Zeitbasis (136) aufweist, und wobei das Verfahren die folgenden Schritte umfasst:
a.Ermittlung eines ersten Zeitwerts der ersten Zeitbasis (138) nach dem Ablauf einer Zeitspanne der Länge T,
b.Ermittlung eines zweiten Zeitwerts der zweiten Zeitbasis (136) nach dem Ablauf einer Zeitspanne der Länge T,
c. Bestimmung einer Abweichung zwischen dem ersten und dem zweiten Zeitwert,
d.Auslösen einer Störungsmaßnahme, wenn die Abweichung einen vorgegebenen oder vorgebbaren Grenzwert unterschreitet, insbesondere unterschreitet oder erreicht.

2. Verfahren nach Anspruch 1,
**dadurch gekennzeichnet,**
**dass** eine Störungsmaßnahme ausgelöst wird, wenn die Abweichung einen vorgegebenen oder vorgebbaren zweiten Grenzwert überschreitet.

3. Verfahren nach Anspruch 1 oder 2,
**dadurch gekennzeichnet,**
**dass** die Störungsmaßnahme die Ausgabe einer Meldung bezüglich der Unmöglichkeit der Feststellung einer Unabhängigkeit der ersten und zweiten Zeitbasis umfasst.

4. Verfahren nach einem der Ansprüche 1 bis 3,
**dadurch gekennzeichnet,**
**dass** eine Erfolgsmaßnahme ausgelöst wird, wenn die Abweichung den Grenzwert überschreitet, insbesondere den Grenzwert überschreitet und den zweiten Grenzwert unterschreitet.

5. Verfahren nach einem der Ansprüche 1 bis 4,
**dadurch gekennzeichnet,**
**dass** der ersten (138) und zweiten Zeitbasis (136) jeweils ein Hardware-Schwingelement (134, 132) zugeordnet ist, insbesondere jeweils ein elektromechanischer und/oder piezoelektrischer Schwinger (134, 132) und/oder einen Schwingquarz (134, 132) zugeordnet ist.

6. Verfahren nach einem der Ansprüche 1 bis 5,
**dadurch gekennzeichnet,**
**dass** die Datenverarbeitungseinrichtung (100) als Personal Computer (100) oder Workstation (100) ausgebildet ist, die eine Standard-Zeitbasis (138) mit einem System-Quarz (134) und einer RTC-Zeitbasis (136) zum Betrieb einer Echtzeituhr der Datenverarbeitungseinrichtung umfasst, und
**dass** die erste Zeitbasis (138) unter Verwendung des System-Quarzes (134) betreibbar ist oder betrieben wird und
die zweite Zeitbasis (136) unter Verwendung eines RTC-Quarzes (132) für die Echtzeituhr oder des System-Quarzes (134) betreibbar ist oder betrieben wird.

7. Datenverarbeitungseinrichtung (100), insbesondere Personal Computer (100) oder Workstation (100), zur Durchführung von Automatisierungs-Abläufen, mit
- mindestens einem Prozessor (110),
- einem Hardware-Schwingelement (134),
- einer ersten Zeitbasis (138), insbesondere zur Lieferung eines Taktes für den mindestens einen Prozessor (110), die unter Verwendung des Hardware-Schwingelements (134) betreibbar ist oder betrieben wird,
- einer zweiten Zeitbasis (136), insbesondere zum Betrieb einer Echtzeituhr der Datenverarbeitungseinrichtung, die unter Verwendung eines weiteren Hardware-Schwingelements (132) oder des Hardware-Schwingelements (134) betreibbar ist oder betrieben wird, und
- einer Steuereinrichtung, die zur Durchführung eines Verfahrens gemäß einem der Ansprüche 1 bis 6 ausgebildet und eingerichtet ist.

8. Programm-Element zum Überprüfen einer Datenverarbeitungseinrichtung (100) auf die Eignung zur Durchführung fehlersicherer Automatisierungs-Abläufe, wobei das Programm-Element, wenn es von einem Prozessor (110) ausgeführt wird, zum Durchführen des Verfahrens nach einem der Ansprüche 1 bis 6 eingerichtet ist.

9. Computerlesbares Speichermedium, in dem ein Programm zum Überprüfen einer Datenverarbeitungseinrichtung (100) auf die Eignung zur Durchführung fehlersicherer Automatisierungs-Abläufe gespeichert ist, wobei das Programm, wenn es von einem Prozessor (110) ausgeführt wird, zum Durchführen des Verfahrens nach einem der Ansprüche 1 bis 6 eingerichtet ist.
